# DEMANDE DE BREVET EUROPEEN

(11) **EP 0 940 659 A1**
(43) Date de publication de la demande: **08.09.1999**
(21) Numéro de dépôt: 99400517.1
(22) Date de dépôt: 04.03.1999
(51) Int. Cl.: G01G 23/01

(54) **Procédé de réglage des angles appliqué à des récepteurs de charge et disposif pour sa mise en oeuvre**

(30) Priorité: 05.03.1998 FR 9802810
(71) Demandeur: Balea S.A., 34270 Saint Mathieu de Tréviers (FR)
(72) Inventeur: Fabre,Jacques, 34270 Saint Mathieu de Treviers (FR)

(57) **Abrégé**

L'invention concerne un procédé et un dispositif pour le réglage des angles appliqué à un récepteur de charge (1) du genre comportant au moins deux capteurs (2) à jauges de contrainte, un boîtier de raccordement électronique (3) et un indicateur de poids (4).

Le procédé selon l'invention consiste à associer :
- à chaque capteur (2), un moyen de visualisation (6) indiquant la demande de dépose de la charge d'étalonnage sur la zone dudit capteur et la prise en compte de la mesure par le boîtier électronique (3);
- à chaque mesure d'angle, un moyen d'actionnement (7) pour la prise en compte de ladite mesure par ledit boîtier électronique;
et en ce que lesdits moyens sont placés dans la zone de l'utilisateur. Les moyens de visualisation (6) et d'actionnement (7) peuvent appartenir à un module indépendant ou être choisis parmi les moyens (voyants et boutons poussoirs) appartenant à l'indicateur de poids standard (4).

## Description

L'invention concerne un procédé de réglage des angles appliqué à des récepteurs de charge du genre comportant au moins deux capteurs à jauges de contrainte, un boîtier de raccordement électronique, placé dans la zone du récepteur de charge, et un indicateur de poids, placé dans la zone de l'utilisateur, relié audit boîtier électronique par une liaison, par cable, infrarouge, radio ou d'un autre type.
Elle concerne également un dispositif pour la mise en oeuvre dudit procédé.

Un procédé et un dispositif des genres en question sont décrits dans la demande de brevet EP-0803717 du même déposant, relative à un tablier peseur monobloc autonome.
Dans un tel ensemble, le réglage des angles se fait directement au moyen du boîtier de raccordement électronique qui est placé dans la zone du récepteur de charge, à fourches, qui comporte quatre capteurs de mesure de poids. Le boîtier en question, qui est difficile d'accès, rend toute intervention périodique de maintenance et de contrôle de l'étalonnage difficile.

C'est dans le but de faciliter ce type d'intervention et ce directement à partir du poste de commande de l'ensemble, que le déposant a mis au point un procédé et conçu un dispositif qui éliminent ledit inconvénient.

Le procédé, selon l'invention, se caractérise en ce qu'il consiste à associer :
- à chaque capteur, un moyen de visualisation indiquant, d'une part, la demande de dépose de la masse d'étalonnage sur la zone dudit capteur et, d'autre part, la prise en compte de la mesure par le boîtier électronique;
- à chaque mesure d'angle, un moyen d'actionnement pour la prise en compte de ladite mesure par ledit boîtier électronique;
et en ce que lesdits moyens sont placés dans la zone de l'utilisateur.

Le dispositif pour la mise en oeuvre du procédé se caractérise en ce que le moyen de visualisation est un voyant et le moyen d'actionnement un bouton poussoir.

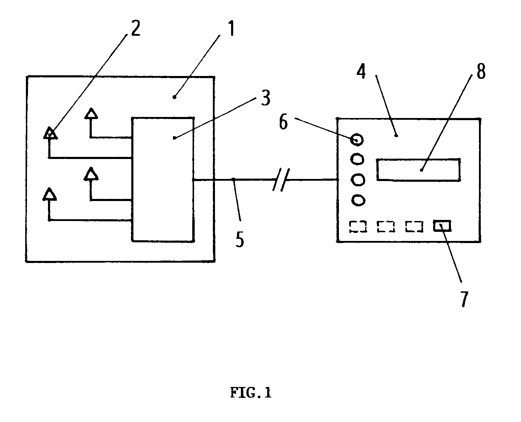

Les caractéristiques et les avantages de l'invention vont apparaître plus clairement à la lecture de la description détaillée qui suitd'aumoins un mode de réalisation préféré de celle-ci donné à titre d'exemple non limitatif et représenté au dessin annexé (figure unique).

Le procédé de réglage des angles est appliqué à des récepteurs de charge (1) du genre comportant au moins deux capteurs (2) à jauges de contrainte, un boîtier de raccordement électronique (3), placé dans la zone du récepteur de charge, apte à traiter simultanément les mesures en provenance des capteurs, à effectuer automatiquement le réglage des angles, à configurer le fonctionnement du module et à stocker les divers paramètres de fonctionnement, et un capteur de poids (4), placé dans la zone de l'utilisateur, relié audit boîtier électronique par une liaison (5), par cable, infrarouge, radio ou d'un autre type.
Il consiste à associer :
- à chaque capteur (2), un moyen de visualisation (6) indiquant, d'une part, la demande de dépose de la masse d'étalonnage sur la zone dudit capteur et, d'autre part, la prise en compte de la mesure par le boîtier électronique (3);
- à chaque mesure d'angle, un moyen d'actionnement (7) de la prise en compte de ladite mesure par ledit boîtier électronique;
lesdits moyens étant placés dans la zone de l'utilisateur.
Les étapes de fonctionnement sont les suivantes :
- mettre le système en mode réglage des angles;
- placer la masse d'étalonnage sur le capteur visualisé;
- valider la mesure par actionnement du bouton poussoir;
- placer la masse sur le nouveau capteur visualisé;
- valider la mesure par actionnement du bouton poussoir;
- répéter les mêmes opérations jusqu'au dernier capteur;
- remettre le système en mode pesage.

Le dispositif pour la mise en oeuvre dudit procédé comporte :
- comme moyen de visualisation (6), un voyant, ou graphisme, lumineux qui par exemple clignote pour indiquer la présence de la masse d'étalonnage et qui passe en position fixe pour indiquer la prise en compte de la mesure par le boîtier électronique (3);
- comme moyen d'actionnement (7), un bouton poussoir de validation unique ou multiple (égal au nombre de voyants).
Les moyens (6) et (7) peuvent appartenir :
- soit à un module indépendant;
- soit à l'indicateur de poids standard (4) équipant l'ensemble récepteur de charge.
L'indicateur de poids (4) affiche (8), à chaque mesure d'angle, la valeur de la masse d'étalonnage placée dans la zone du capteur concerné.

Bien entendu, l'invention n'est pas limitée aux modes de réalisation décrits et représentés pour lesquels on pourra prévoir d'autres variantes, en particulier dans :
- le nombre et le type de capteurs;
- les types de récepteurs de charge : à plateau, à fourches ou autre;
- les moyens de visualisation et d'actionnement (validation).

## Revendications

1. Procédé de réglage des angles appliqué à des récepteurs de charge (1) du genre comportant au moins deux capteurs (2) à jauges de contrainte, un boîtier de raccordement électronique (3), placé dans la zone du récepteur de charge, apte à traiter simultanément les mesures provenant des capteurs, à effectuer automatiquement le réglage des angles, à configurer le fonctionnement de l'ensemble et à stocker les divers paramètres de fonctionnement, et un indicateur de poids (4), placé dans la zone de l'utilisateur, relié audit boîtier de raccordement par une liaison (5), par cable, infrarouge, radio ou d'un autre type;
caractérisé en ce qu'il consiste à associer :
- à chaque capteur (2), un moyen de visualisation (6) indiquant, d'une part, la demande de dépose de la masse d'étalonnage sur la zone dudit capteur et, d'autre part, la prise en compte de la mesure par le boîtier électronique (3);
- à chaque mesure d'angle, un moyen d'actionnement (7) pour la prise en compte de ladite mesure par ledit boîtier électronique;
et en ce que lesdits moyens sont placés dans la zone de l'utilisateur.

2. Dispositif pour la mise en oeuvre du procédé selon la revendication 1 caractérisé en ce que le moyen de visualisation (6) est un voyant, ou un graphisme, lumineux qui clignote pour indiquer la présence de la masse d'étalonnage sur le capteur correspondant et qui passe en position fixe pour indiquer la prise en compte de la mesure par le boîtier électronique (3).

3. Dispositif pour la mise en oeuvre du procédé selon la revendication 1 caractérisé en ce que le moyen d'actionnement (7) est un bouton poussoir de validation unique.

4. Dispositif, selon les revendications 2 et 3, caractérisé en ce que les moyens de visualisation (6) et d'actionnement (7) appartiennent à un module indépendant.

5. Dispositif, selon les revendications 2 et 3, caractérisé en ce que les moyens de visualisation (6) et d'actionnement (7) sont choisis parmi les moyens appartenant à l'indicateur de poids standard (4) équipant l'ensemble récepteur de charge.

6. Dispositif, selon la revendication 5, caractérisé en ce que l'indicateur de poids (4) affiche (8), à chaque mesure d'angle, la valeur de la masse d'étalonnage placée dans la zone du capteur concerné.
